# EUROPEAN PATENT SPECIFICATION

(11) **EP 0 897 810 B1**
(45) Date of publication and mention of the grant of the patent: **02.07.2003**
(21) Application number: 98115277.0
(22) Date of filing: 13.08.1998
(51) Int. Cl.: B41N 3/04, C01F 7/14, C09K 3/14

(54) **Process for the surface treatment of aluminium support for printing plate**
Verfahren zur Oberflächenbehandelung eines Aluminiumträgers für Flachdruckplatten
Procédé de traitement de surfaces en aluminium pour plaques d'impression

(30) Priority: 22.08.1997 JP 22674797
(43) Date of publication of application: 24.02.1999
(73) Proprietor: FUJI PHOTO FILM CO., LTD, Fujinomiya-shi, Kanagawa (JP)
(72) Inventor: Fukuta, Hiroshi, Yoshida-cho, Haibara-gun, Shizuoka (JP); Miwa, Hideki, Yoshida-cho, Haibara-gun, Shizuoka (JP)
(74) Representative: Grünecker, Kinkeldey, Stockmair & Schwanhäusser Anwaltssozietät

(56) References cited:
- EP-A- 0 344 469
- EP-A- 0 501 458
- EP-A- 0 734 883
- EP-A- 0 771 760

## Description

The present invention relates to a process for the surface treatment of an aluminum support for printing plate as a lithographic printing plate support. More particularly, the present invention relates to a process for the surface treatment of an aluminum support for printing plate which operates at a reduced running cost with a drastic reduction of industrial waste.

As a support for lithographic printing plate there has heretofore been widely used an aluminum plate. This aluminum support for lithographic printing plate is subjected to roughening to enhance the adhesion to the photosensitive layer provided thereon. This roughening is carried out by continuously graining an aluminum support, e.g., by rubbing the aluminum support with an abrasive slurry (normally a mixture of pumice or pumicite obtained from igneous rock or alumina with water) under a rotating brush.

However, in order to maintain a predetermined grain, it is necessary to keep the grain size of the abrasive in a predetermined distribution. To this end, the abrasive which has been worn and ground to have a smaller grain size than the desired value needs to be discharged from the system through a classifier. Thus, it has taken a great cost to dispose of the abrasive used.

On the other hand, it has been practiced to etch the surface of the aluminum support for printing plate with caustic soda before or after mechanical or electrochemical roughening of the surface of the aluminum support. However, since the aluminum ion concentration in the etching solution has an extremely great effect on the quality of the aluminum support for printing plate, it is important to keep the aluminum ion concentration in the etching solution at a predetermined value.

Further, various surface treatments such as anodization with sulfuric acid have been practiced. Therefore, it is also necessary to neutralize the waste liquid to produce an aluminum hydroxide sludge from which aluminum hydroxide is recovered.

The inventors proposed as a mechanical roughening method a method involving brush graining in EP0734883A1 which corresponds to JP-A-8-324143 (The term "JP-A" as used herein means an "unexamined published Japanese patent application"). In accordance with the surface treatment method disclosed in the above cited patent, the disadvantages of brush graining method can be eliminated. Thus, fill-in and scumming can be eliminated to provide a printing plate having improved printing properties. However, since this method employs aluminum hydroxide, which exhibits a low hardness, as an abrasive, a new problem arises that it requires the consumption of a great amount of the abrasive.

As mentioned above, when it is desired to maintain a good abrasion in the surface treatment of an aluminum support for printing plate, a consequence must be encountered that the mechanical surface treatment (surface roughening) is accompanied by the discharge of an increased amount of waste abrasive, which in turn is accompanied by the use of an increased amount of a new abrasive.

Further, when an aluminum support for printing plate is chemically or electrochemically roughened (surface-treated), the surface treatment is accompanied by the discharge of a great amount of waste. Another consequence is that the amount of chemicals required for the surface treatment is increased. Therefore, the disposal of waste requires complicated procedure and raised cost. For example, the expenses for abrasive and chemicals are drastically increased.

EP-A-771760 discloses a process for the purification of aluminum hydroxide character-ized in that crystalline aluminum hydroxide which is ground and etched is used as an original seed crystal. A process for the surface treatment of aluminum plate utilizing said purification process is also disclosed.

An object of the present invention is to provide a process for the surface treatment of an aluminum support for printing plate which can operate stably at an extremely low cost as compared with the prior art by reducing the amount of waste discharged from the step of surface treatment of an aluminum plate as a support for lithographic printing plate and the amount of chemicals and abrasive to be used in the surface treatment.

The foregoing object of the present invention is accomplished by the following process for the surface treatment of an aluminum support for printing plate according to the present invention.
(1) A process for the surface treatment of an aluminum support for printing plate which comprises a step of brush-graining with an abrasive brush and an abrasive slurry, characterized in that:
   - as said abrasive there is used aluminum hydroxide;
   - said aluminum hydroxide which has been used in graining is dissolved in a sodium aluminate solution;
   - said sodium aluminate solution having a raised supersaturation degree; and
   - said aluminum hydroxide which has been left undissolved and seed crystal aluminum hydroxide undergo hydrolysis reaction to produce crystalline aluminum hydroxide which is then purified and partially supplied as a regenerated abrasive.
(2) The process for the surface treatment of an aluminum support for printing plate according to Clause (1), wherein the percent dissolution of said aluminum hydroxide which has been used in abrasion in a sodium aluminate solution is from 15% to 100%.
(3) A process for the surface treatment of an aluminum support for printing plate which comprises:
   - preparing a part of a treatment liquid containing a sodium aluminate solution to be recycled for surface etching as a supersaturated sodium aluminate solution; or
   - mixing a part of said treatment liquid with an aluminum sludge mainly composed of amorphous aluminum hydroxide produced by the neutralization of waste acid liquid and waste alkaline liquid discharged from the step of surface treatment of an aluminum support to prepare a supersaturated sodium aluminate solution; and then
   - allowing said sodium aluminate solution to undergo hydrolysis reaction to crystallize aluminum hydroxide which is then purified and recycled as an abrasive,
   characterized in that
   - aluminum hydroxide which has been used in abrasion is dissolved in said supersaturated sodium aluminate solution; and
   - said aluminum hydroxide which has been used in abrasion but which has been left undissolved and seed crystal aluminum hydroxide undergo hydrolysis reaction to produce crystalline aluminum hydroxide which is then purified and partially supplied as an abrasive again.
(4) The process for the surface treatment of an aluminum support for printing plate according to Clause (3), wherein the percent dissolution of said aluminum hydroxide which has been used in abrasion in a sodium aluminate solution is from 15% to 100%.
(5) The process for the surface treatment of an aluminum support for printing plate according to Clause (3), wherein the waste acid liquid and waste alkaline liquid discharged from the step of surface treatment of an aluminum support for printing plate were adjusted to a pH value of from not less than 5.0 to less than 9.0 when neutralized.

Fig. 1 is a schematic flow chart of treatment procedure illustrating the first embodiment of the process for the surface treatment of an aluminum support for printing plate according to the present invention;
Fig. 2 is a diagram illustrating a part of a schematic flow chart of treatment procedure of the second embodiment of the process for the surface treatment of an aluminum support for printing plate according to the present invention; and
Fig. 3 is a diagram illustrating the other part of a schematic flow chart of treatment procedure of the second embodiment of the process for the surface treatment of an aluminum support for printing plate according to the present invention.

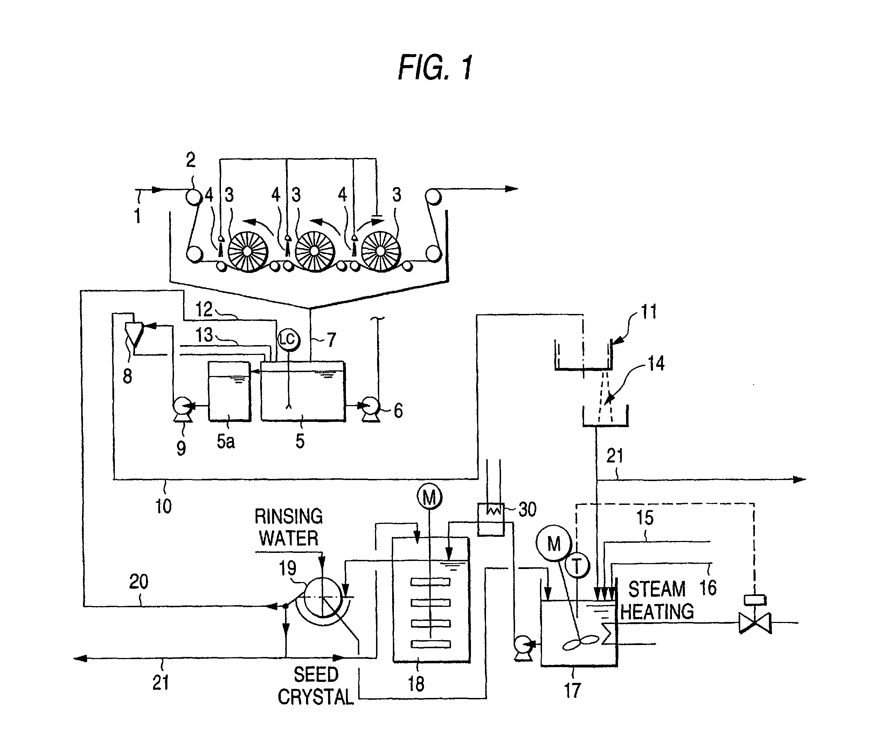

A first embodiment of the process for the surface treatment of an aluminum support for printing plate will be described hereinafter in connection with Fig. 1.

In the present embodiment of the process for the surface treatment of an aluminum support for printing plate, an aluminum support 1 is mechanically surface-treated with an abrasive slurry 4 as an abrasive which has been properly supplied under abrasive brushes 3 disposed at a predetermined interval while running through a predetermined route, supported by a plurality of pass rollers 2, as shown in Fig. 1.

The abrasive slurry 4 is supplied onto the surface of the aluminum support 1 by the action of a circulating pump 6 while being rubbed against the aluminum support 1 under the abrasive brushes 3, and then returned to a circulating tank 5 through an abrasive slurry return line 7. In the surface treatment by brush graining, the abrasive slurry which has been used for surface treatment is liable to gradual reduction of grain diameter of abrasive if it continues to be used, disabling the desired surface treatment.

Accordingly, the circulating tank 5 is replenished with a new batch of the abrasive 12 and water 13.

The replenishment with the abrasive 12 and water 13 causes part of the abrasive slurry to flow into an overflow tank 5a. The abrasive slurry which has thus overflown is supplied into a cyclon 8 by a pump 9 and then subjected to classification by the cyclone 8. The abrasive slurry which has been classified into a group having a great grain diameter is then returned to the circulating tank 5. On the other hand, the abrasive slurry which has been classified into a group having a small grain diameter is passed through an abrasive slurry discharge line 10 to a centrifugal separator 11 where it is then dehydrated to obtain a used abrasive 14 in powder form. Sodium hydroxide 15 and water 16 are supplied to a tank 17 in order to control the liquid concentration in the tank 17.

Aluminum hydroxide 21 is then recovered from part of the used abrasive. The used abrasive is also partially charged into a tank 17 for dissolving used aluminum hydroxide. The aluminum hydroxide 21 thus recovered can be used as starting material for other purposes. In this case, the aluminum hydroxide 21 is valuable.

The percent dissolution of said aluminum hydroxide which has been used in abrasion in a sodium aluminate solution is from 15% to 100%, preferably from 50% to 80%. At the upper limit or more, it become difficult to dissolve said aluminum hydroxide and increase initial cost or running cost for operating the system.

The abrasive which has been charged into the aluminum hydroxide dissolution tank 17 is then stirred with sodium aluminate which has been heated by steam for a predetermined period of time so that it is dissolved in sodium aluminate. The sodium aluminate solution which has thus aluminum hydroxide dissolved therein to have a raised supersaturation degree is properly cooled by a cooler 30, and then passed to a crystallization tank 18. In the crystallization tank 18, crystallization reaction occurs to produce crystalline aluminum hydroxide again which is then subjected to solid-liquid separation by a dehydrator 19 to obtain crystalline aluminum hydroxide in powder form.

The aluminum hydroxide which has thus been subjected to solid-liquid separation by the dehydrator 19 is partially supplied into the circulating tank 5 as a regenerated abrasive aluminum hydroxide 20 as necessary. The remainder of the aluminum hydroxide thus withdrawn may be supplied into the crystallization tank 18 as seed crystal. It may be withdrawn as aluminum hydroxide 21 which is then reused as starting material for other purposes.

In the tank 17 for dissolving used aluminum hydroxide, the liquid temperature, liquid concentration (T-NAOH), stirring intensity (crushing action thereby) and retention time can be controlled to adjust the percent dissolution of used aluminum hydroxide.

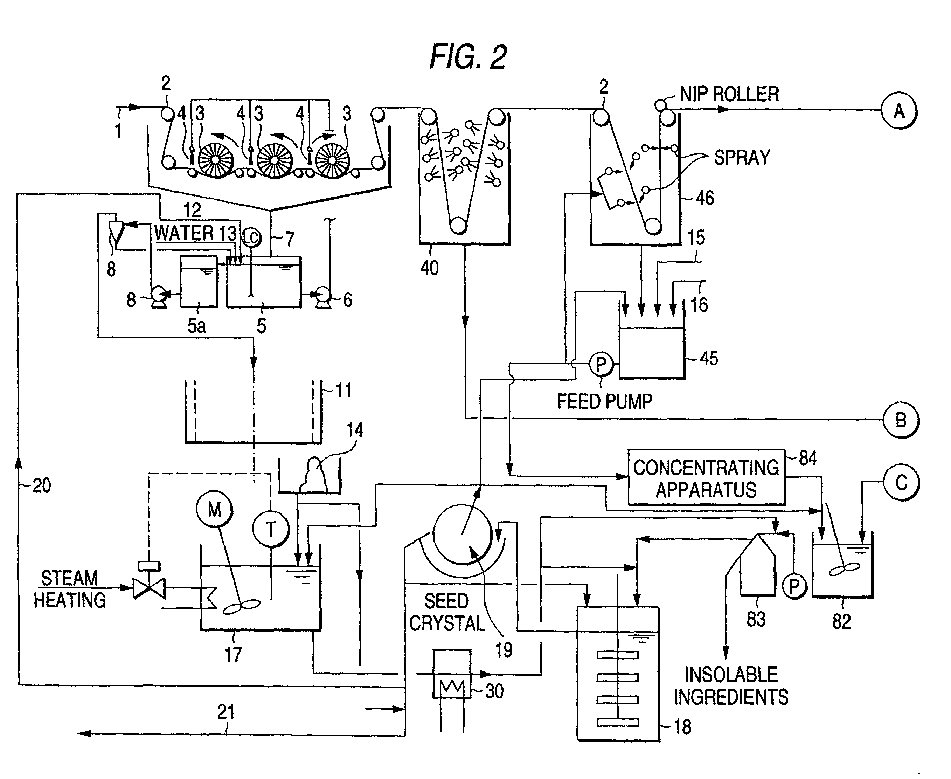

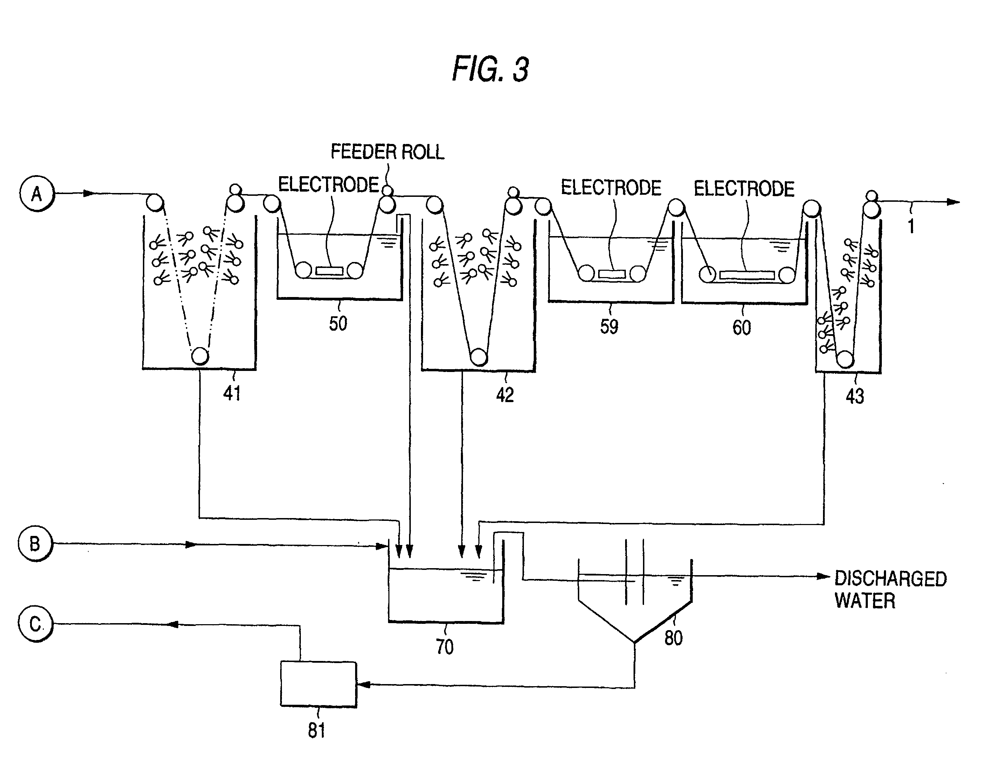

A second embodiment of the process for the surface treatment of an aluminum support for printing plate according to the present invention will be described hereinafter in connection with Figs. 2 and 3. Figs. 2 and 3 form a continuous treatment process. The two parts are connected at A, B and C.

As shown in Figs. 2 and 3, in the step of surface treatment of an aluminum support for printing plate in the present embodiment, an aluminum support 1 is subjected to mechanical surface treatment with an abrasive under an abrasive brush 3, supported by a pass roll 2, in the same manner as in the first embodiment. An abrasive slurry 4 is supplied onto the surface of the aluminum support by the action of a circulating pump 6 while being rubbed against the aluminum support 1 under the abrasive brushes 3, and then returned to a circulating tank 5 through an abrasive slurry return line 7.

In the surface treatment by brush graining, the abrasive slurry which has been used for surface treatment is liable to gradual reduction of grain diameter of abrasive if it continues to be used, disabling the desired surface treatment. Accordingly, the circulating tank 5 is replenished with a new batch of the abrasive 12 and water 13. This replenishment causes part of the abrasive slurry to flow into an overflow tank 5a. The abrasive slurry which has thus overflown is supplied into a cyclon 8 by a pump 9 and then subjected to classification by the cyclone 8.

The abrasive slurry which has been classified into a group having a great grain diameter is then returned to the circulating tank 5. On the other hand, the abrasive slurry which has been classified into a group having a small grain diameter is passed through an abrasive slurry discharge line 10 to a centrifugal separator 11 where it is then dehydrated to obtain a used abrasive 14 in powder form. The used abrasive 14 is then partially charged into a tank 17 for dissolving used aluminum hydroxide.

The used abrasive which has thus been charged into the tank 17 is then stirred with sodium aluminate which has been heated in the dissolution tank 17 for a predetermined period of time so that it is dissolved in sodium aluminate. The sodium aluminate solution which has thus aluminum hydroxide dissolved therein to have a raised supersaturation degree is then passed to a crystallization tank 18. During the feed of the sodium aluminate solution is properly cooled by a cooler 30.

In the crystallization tank 18, crystallization reaction occurs to produce crystalline aluminum hydroxide again which is then subjected to solid-liquid separation by a dehydrator 19 to obtain crystalline aluminum hydroxide in powder form.

The aluminum hydroxide thus withdrawn is then partially supplied as an abrasive again. In other words, it is supplied into the circulating tank as a regenerated aluminum hydroxide 20 as necessary. The remainder of the aluminum hydroxide thus withdrawn (part other than used for replenishment) is then withdrawn as a valuable aluminum hydroxide 21 which is then reused as starting material for other purposes.

In the tank 17 for dissolving used aluminum hydroxide, the liquid temperature, liquid concentration (T-NAOH), stirring intensity (crushing action thereby) and retention time can be controlled to adjust the percent dissolution of used aluminum hydroxide. In the present embodiment, the control over liquid temperature is carried out by steam heating. The stirring can be accomplished by means of a screw which is properly driven.

On the other hand, waste acid liquid and waste alkaline liquid which have been discharged from rinsing tanks 40, 41, 42 and 43, an electrolytic tank 50 and an anodization tank 60 of the step of surface treatment of the aluminum support 1 are neutralized at a pH adjustment tank 70, and then passed to a cohesion and sedimentation tank 80 where amorphous aluminum hydroxide (aluminum hydroxide sludge) flock is produced. The amorphous aluminum hydroxide flock is then concentrated, and then dehydrated at a filter press 81.

The aluminum hydroxide sludge thus dehydrated is then charged into a sludge dissolution tank 82 so that it is dissolved in a sodium aluminate solution. As a result, the supersaturation degree of the sodium aluminate solution is raised. The sodium aluminate solution is passed to a separator 83 where insoluble components are then separated therefrom. The liquid thus separated is charged into the crystallization tank 18 where it is subjected to hydrolysis reaction to purify aluminum hydroxide.

The aluminum hydroxide thus purified is then subjected to solid-liquid separation by the dehydrator 19 (vacuum filter). The filtrate is partially passed to a liquid preparation tank 45 so that it is used as an etching solution. The remainder of the filtrate is then passed to the tank 17 for dissolving used aluminum hydroxide and a sludge dissolution tank 82 as a dissolving liquid. The liquid in the liquid preparation tank 45 is passed to the sludge dissolution tank 82 through a concentrating apparatus 84. In Fig. 2, the reference numeral 46 indicates an etching tank in which the liquid thus prepared can be properly sprayed onto the aluminum support, and in Fig. 3, the reference numeral 59 indicates an anodization and power supply tank in which electrodes are properly arranged.

Examples of the process for the surface treatment of an aluminum support for printing plate according to the present invention will be described hereinafter.

### EXAMPLE 1

In Example 1, treatment was effected in accordance with the process for the surface treatment of an aluminum support for printing plate shown in Fig. 1.

The treatment conditions in Example 1 are as set forth in Table 1.

**Table 1**

| Treatment conditions in Example 1 | |
|---|---|
| Conditions of mechanical roughening of aluminum support | |
| Width of aluminum support | 1,000 mm |
| Treatment speed | 50 m/min. |
| Abrasive | Crystalline aluminum hydroxide; average grain diameter: 30 µm |
| Abrasive concentration | 200 g/l |
| Used abrasive | Crystalline aluminum hydroxide; average grain diameter: 15 µm |

| Conditions of dissolution of abrasive aluminum hydroxide | |
|---|---|
| Solution concentration | T-NAOH: 120 g/l; Al: 28 g/l |
| Solution temperature | 95°C |
| Solution retention time | 5 hours |
| Solution temperature before charging into crystallization tank | 55°C |

| Conditions of crystallization reaction | |
|---|---|
| Crystallization solution concentration | T-NAOH: 120 g/l; Al: 24 g/l |
| Crystallization solution temperature | 55°C |
| Seed crystal concentration in crystallization tank | 150 g/l |

### COMPARATIVE EXAMPLE 1

On the other hand, in Comparative Example 1 as opposed to Example 1, the dissolution and crystallization of used aluminum hydroxide were not effected. The used aluminum hydroxide thus produced was sold as a valuable. As the abrasive to be supplied as replenisher there was used aluminum hydroxide used as an industrial starting material.

These results show that Example 1 allows stable treatment in a process for the surface treatment of an aluminum support by mechanical roughening with crystalline aluminum hydroxide as an abrasive and recycling of the abrasive from the step of surface treatment of an aluminum plate as printing plate support as compared with Comparative Example 1, making it possible to reduce the cost of abrasive and the discharged amount of waste.

In other words, Example 1 provided results satisfying Claims 1 and 2 according to the present invention.

### EXAMPLE 2

In Example 2, treatment was effected in accordance with the process for the surface treatment of an aluminum support for printing plate shown in Figs. 2 and 3.

The treatment conditions in Example 2 are as set forth in Table 2.

**Table 2**

| Treatment conditions in Example 2 | |
|---|---|
| Conditions of mechanical roughening of aluminum support | |
| Width of aluminum support | 1,000 mm |
| Treatment speed | 50 m/min. |
| Abrasive | Crystalline aluminum hydroxide; average grain diameter: 30 µm |
| Abrasive concentration | 200 g/l |
| Used abrasive | Crystalline aluminum hydroxide; average grain diameter: 15 µm |

| Conditions of dissolution of abrasive aluminum hydroxide | |
|---|---|
| Solution concentration | T-NAOH: 120 g/l; Al: 28 g/l |
| Solution temperature | 95°C |
| Solution retention time | 5 hours |
| Solution temperature before charging into crystallization tank | 55°C |

| Conditions of crystallization reaction | |
|---|---|
| Crystallization solution concentration | T-NAOH: 120 g/l; Al: 24 g/l |
| Crystallization solution temperature | 55°C |
| Seed crystal concentration in crystallization tank | 150 g/l |

### EXAMPLE 3

In Example 3, treatment was effected in accordance with the process for the surface treatment of an aluminum support for printing plate shown in Figs. 2 and 3 in the same manner as in Example 2.

The treatment conditions of Example 3 were the same as used in Example 2 except for those set forth in Table 3 below.

**Table 3**

| Treatment conditions in Example 3 | |
|---|---|
| Conditions of treatment of waste liquid from the surface treatment of aluminum support | |
| pH adjustment tank | 7.0 |
| Water content in aluminum hydroxide sludge | 80% |

| Conditions of dissolution of aluminum hydroxide sludge | |
|---|---|
| Solution concentration | T-NAOH: 120 g/l; Al: 28 g/l |
| Solution temperature | 70°C |
| Solution retention time | 30 min. |
| Solution temperature before charging into crystallization tank | 55°C |

### COMPARATIVE EXAMPLE 2

In Comparative Example 2 as opposed to Examples 2 and 3, the dissolution and crystallization of used aluminum hydroxide were not effected. The used aluminum hydroxide thus produced was sold as a valuable. As the abrasive to be supplied as replenisher there was used aluminum hydroxide used as an industrial starting material.

These results show that Examples 2 and 3 allow stable treatment in a process for the surface treatment of an aluminum support by mechanical roughening with crystalline aluminum hydroxide as an abrasive and reduction of the discharged amount of waste from the step of surface treatment of an aluminum plate as lithographic printing plate support and the used amount of chemicals and abrasive as compared with Comparative Example 2. In some detail, Example 2, in addition to the effects of Example 1, makes it possible to reduce the discharged amount of aluminum hydroxide sludge (waste) and the used amount of the etching caustic soda (i.e., chemicals used). Further, Example 3, in addition to the effects of Example 2, makes it possible to stabilize the quality of aluminum hydroxide sludge thus produced.

In other words, Example 2 provided results satisfying the above-described Clauses (3) and (4), and Example 3 provided results satisfying the above-described Clauses (3) and (5).

As mentioned above, in accordance with the process for the surface treatment of an aluminum support for printing plate of the present invention, in a process for the surface treatment of an aluminum support involving mechanical roughening with crystalline aluminum hydroxide as an abrasive, the abrasive can be effectively used and the resulting abrasion quality can be stabilized. Further, the discharged amount of waste from the step of surface treatment of an aluminum plate as a lithographic printing plate support and the used amount of chemicals and abrasive can be reduced from that of the prior art.

As a result, the reduction of the running cost in the surface treatment step can be realized, enabling stable provision of a high quality aluminum support for printing plate at a low cost.

## Claims

1. A process for the surface treatment of an aluminum support for printing plate which comprises a step of brush-graining with an abrasive brush and an abrasive slurry, **characterized in that**:
- as said abrasive there is used aluminum hydroxide;
- said aluminum hydroxide which has been used in graining is dissolved in a sodium aluminate solution;
- said sodium aluminate solution having a raised supersaturation degree; and
- said aluminum hydroxide which has been left undissolved and seed crystal aluminum hydroxide undergo hydrolysis reaction to produce crystalline aluminum hydroxide which is then purified and partially supplied as a regenerated abrasive.

2. The process according to claim 1, wherein the percent dissolution of said aluminum hydroxide which has been used in abrasion in a sodium aluminate solution is from 15% to 100%.

3. A process for the surface treatment of an aluminum support for printing plate which comprises:
- preparing a part of a treatment liquid containing a sodium aluminate solution to be recycled for surface etching as a supersaturated sodium aluminate solution; or
- mixing a part of said treatment liquid with an aluminum sludge mainly composed of amorphous aluminum hydroxide produced by the neutralization of waste acid liquid and waste alkaline liquid discharged from the step of surface treatment of an aluminum support to prepare a supersaturated sodium aluminate solution; and then
- allowing said sodium aluminate solution to undergo hydrolysis reaction to crystallize aluminum hydroxide which is then purified and recycled as an abrasive,
**characterized in that**
- aluminum hydroxide which has been used in abrasion is dissolved in said supersaturated sodium aluminate solution; and
- said aluminum hydroxide which has been used in abrasion but which has been left undissolved and seed crystal aluminum hydroxide undergo hydrolysis reaction to produce crystalline aluminum hydroxide which is then purified and partially supplied as an abrasive again.

4. The process for the surface treatment of an aluminum support for printing plate according to claim 3, wherein the percent dissolution of said aluminum hydroxide which has been used in abrasion in a sodium aluminate solution is from 15% to 100%.

5. The process for the surface treatment of an aluminum support for printing plate according to claim 3, wherein the waste acid liquid and waste alkaline liquid discharged from the step of surface treatment of an aluminum support for printing plate were adjusted to a pH value of from not less than 5.0 to less than 9.0 when neutralized.

## Patentansprüche

1. Verfahren zur Oberflächenbehandlung eines Aluminiumträgers für eine Druckplatte, welches einen Schritt der Bürstenkörnung mit einer Schleifbürste und einer Schleifmittelaufschlämmung umfasst, **dadurch gekennzeichnet, dass**
- als Schleifmittel Aluminiumhydroxid verwendet wird,
- das Aluminiumhydroxid, das bei der Körnung verwendet worden ist, in einer Natriumaluminatlösung aufgelöst wird,
- die Natriumaluminatlösung einen erhöhten Übersättigungsgrad hat, und
- das Aluminiumhydroxid, das nicht aufgelöst zurückgeblieben ist, und Impfkristall-Aluminiumhydroxid eine Hydrolysereaktion zur Herstellung von kristallinem Aluminiumhydroxid eingehen, welches dann gereinigt und teilweise als regeneriertes Schleifmittel zugeführt wird.

2. Verfahren nach Anspruch 1, worin die prozentuale Auflösung des Aluminiumhydroxids, das beim Abrieb verwendet worden ist, in einer Natriumaluminatlösung 15 % bis 100 % beträgt.

3. Verfahren zur Oberflächenbehandlung eines Aluminiumträgers für eine Druckplatte, welches umfasst:
- das Herstellen eines Teils einer Behandlungsflüssigkeit, die eine zurückzuführende Natriumaluminatlösung für die Oberflächenätzung als eine übersättigte Natriumaluminatlösung enthält, oder
- das Mischen eines Teils dieser Behandlungsflüssigkeit mit einem Aluminiumschlamm, der hauptsächlich aus amorphem Aluminiumhydroxid besteht, hergestellt durch die Neutralisation von Abfallsäureflüssigkeit und Abfallalkaliflüssigkeit, ausgetragen aus dem Schritt der Oberflächenbehandlung eines Aluminiumträgers, zur Herstellung einer übersättigten Natriumaluminatlösung, und dann
- die Natriumaluminatlösung eine Hydrolysereaktion eingehen lassen, um Aluminiumhydroxid zu kristallisieren, welches dann gereinigt und als Schleifmittel zurückgeführt wird, **dadurch gekennzeichnet, dass**
- Aluminiumhydroxid, welches beim Abrieb verwendet worden ist, in der übersättigten Natriumaluminatlösung aufgelöst wird, und
- das Aluminiumhydroxid, welches beim Abrieb verwendet worden ist, welches aber nicht aufgelöst zurückgeblieben ist, und Impfkristall-Aluminiumhydroxid eine Hydrolysereaktion zur Herstellung von kristallinem Aluminiumhydroxid eingehen, welches dann gereinigt und teilweise als Schleifmittel wieder zurückgeführt wird.

4. Verfahren zur Oberflächenbehandlung eines Aluminiumträgers für eine Druckplatte nach Anspruch 3, worin die prozentuale Auflösung des Aluminiumhydroxids, welches beim Abrieb verwendet worden ist, in einer Natriumaluminatlösung 15 % bis 100 % beträgt.

5. Verfahren zur Oberflächenbehandlung eines Aluminiumträgers für eine Druckplatte nach Anspruch 3, worin die Abfallsäureflüssigkeit und die Abfallalkaliflüssigkeit, ausgetragen aus dem Schritt der Oberflächenbehandlung eines Aluminiumträgers für eine Druckplatte auf einen pH-Wert von nicht weniger als 5,0 bis weniger als 9,0, wenn eine Neutralisation erfolgte, eingestellt wurden.

## Revendications

1. Processus pour le traitement de surface d'un support en aluminium pour plaque d'impression qui comprend une étape de grainage à la brosse avec une brosse abrasive et une boue abrasive, **caractérisé en ce que** :
- en tant que dit abrasif on utilise l'hydroxyde d'aluminium ;
- ledit hydroxyde d'aluminium qui est utilisé lors du grainage est dissout dans une solution d'aluminate de sodium ;
- ladite solution d'aluminate de sodium ayant un degré élevé de super-saturation ; et
- ledit hydroxyde d'aluminium qui reste insoluble et les germes cristallins d'hydroxyde d'aluminium subissent une réaction d'hydrolyse pour produire de l'hydroxyde d'aluminium cristallin qui est alors purifié et partiellement utilisé en tant qu'abrasif régénéré.

2. Processus selon la revendication 1, dans lequel le pourcentage de dissolution dans la solution d'aluminate de sodium dudit hydroxyde d'aluminium qui est utilisé lors de l'abrasion, est de 15% à 100%.

3. Processus pour le traitement de surface d'un support en aluminium pour plaque d'impression qui comprend :
- la préparation d'une partie d'un liquide de traitement contenant une solution à recycler d'aluminate de sodium pour le décapage de surface, en tant que solution d'aluminate de sodium super-saturée ; ou
- le mélange d'une partie dudit liquide de traitement avec une boue d'aluminium principalement composée d'hydroxyde d'aluminium amorphe produit par la neutralisation d'un liquide acide usagé et d'un liquide alcalin usagé déversés à partir de l'étape de traitement de surface d'un support en aluminium, afin de préparer une solution d'aluminate de sodium super-saturée ; et ensuite
- l'autorisation de ladite solution d'aluminate de sodium de subir une réaction d'hydrolyse afin de cristalliser l'hydroxyde d'aluminium qui est alors purifié et recyclé en tant qu'abrasif,
**caractérisé en ce que**
- l'hydroxyde d'aluminium qui est utilisé lors de l'abrasion est dissout dans ladite solution d'aluminate de sodium super-saturée ; et
- ledit hydroxyde d'aluminium qui est utilisé lors de l'abrasion mais qui reste insoluble et les germes cristallins d'hydroxyde d'aluminium subissent une réaction d'hydrolyse afin de produire de l'hydroxyde d'aluminium cristallin qui est alors purifié et qui est partiellement à nouveau utilisé comme abrasif.

4. Processus pour le traitement de surface d'un support en aluminium pour plaque d'impression selon la revendication 3, dans lequel le pourcentage de dissolution dans la solution d'aluminate de sodium dudit hydroxyde d'aluminium qui est utilisé lors de l'abrasion, est de 15% à 100%.

5. Processus pour le traitement de surface d'un support en aluminium pour plaque d'impression selon la revendication 3, dans lequel le liquide acide usagé et le liquide alcalin usagé déversés à partir de l'étape de traitement de surface d'un support en aluminium pour plaque d'impression ont été ajustés à une valeur de pH de pas moins de 5,0 à moins de 9,0 une fois neutralisés.
